Europäisches Patentamt

European Patent Office

Office européen des brevets

(11) Veröffentlichungsnummer: **0 208 905**
A1

# (12) EUROPÄISCHE PATENTANMELDUNG

(21) Anmeldenummer: 86107796.4

(51) Int. Cl.⁴: **H 04 L 27/00, H 04 L 25/02**

(22) Anmeldetag: 07.06.86

(30) Priorität: 19.07.85 DE 3525821

(43) Veröffentlichungstag der Anmeldung: **21.01.87**
**Patentblatt 87/4**

(84) Benannte Vertragsstaaten: **DE FR GB NL SE**

(71) Anmelder: **ANT Nachrichtentechnik GmbH,
Gerberstrasse 33, D-7150 Backnang (DE)**

(72) Erfinder: **Maurer, Robert, Prof. Dr., Am Staden 11,
D-6600 Saarbrücken (DE)**

(74) Vertreter: **Schickle, Gerhard, Dipl.-Ing., ANT
Nachrichtentechnik GmbH Patent- und Lizenzabteilung
Gerberstrasse 33, D-7150 Backnang (DE)**

(54) Verfahren zum Erzeugen eines FSK-PSK modulierten Signals.

(57) Ein einfaches Verfahren zum Erzeugen eines sowohl frequenz- als auch phasenumgetasteten Signals (s(t)), besteht darin, daß ein Trägersignal auf die eine oder andere von mindestens zwei verschiedenen Frequenzen umgetastet wird und dieses frequenzumgetastete Trägersignal (f(t)) mit mindestens einem in einer Phase auf 0° oder 180° umschaltbaren Signal (x(t)) multipliziert wird.

## Verfahren zum Erzeugen eines FSK-PSK modulierten Signals

Die vorliegende Erfindung betrifft ein Verfahren zum Erzeugen eines sowohl frequenz- als auch phasenumgetasteten Signals.

Bereits aus dem Aufsatz von M.J.O'Mahony in Electronics Letters, 14. Okt. 1976, Vo. 12, No. 21, S. 550, 551 ist es bekannt, die beiden Modulationsarten der Frequenzumtastung (FSK) und der Phasenumtastung (PSK) gleichzeitig auf ein Signal anzuwenden. Es wird in dieser Literaturstelle gezeigt, daß ein solches frequenz- und phasenumgetastetes Signal sich durch eine geringere Fehlerwahrscheinlichkeit auszeichnet, als Signale, welche, um genausoviele Signalzustände zu übertragen, in bekannter Weise mehrfach phasenmoduliert oder phasen- und amplitudenmoduliert sind. In dem Aufsatz von M.J.O'Mahony ist ein Modulationsverfahren angegeben, welches für die Erzeugung eines Signals mit zwei verschiedenen Frequenz- und zwei verschiedenen Phasenzuständen die Ausübung zweier Multiplikationen und einer Addition erfordert. Der Verfahrensaufwand würde sich erheblich vergrößern, wenn ein Signal mit zwei Frequenz- und vier Phasenzuständen, also ein FSK-QPSK Signal, erzeugt werden soll.

Der Erfindung liegt daher die Aufgabe zugrunde, ein einfaches Verfahren zum Erzeugen eines sowohl frequenz- als auch phasenumgetasteten Signals anzugeben, das von einem mit möglichst geringem Aufwand realisierbaren Modulator durchgeführt werden kann.

Erfindungsgemäß wird diese Aufgabe durch die im Kennzeichen des Patentanspruchs 1 angegebenen Merkmale gelöst.

Zweckmäßige Ausführungen der Erfindung gehen aus den Unteransprüchen hervor.

Das erfindungsgemäße Modulationsverfahren kommt bei der Erzeugung eines insgesamt acht Signalzustände bildenden FSK-QPSK Signals, also eines Signals mit zwei Frequenz- und vier Phasenzuständen, mit nur zwei Multiplikationen und einer Addition aus. Der oben erwähnte Stand der Technik benötigt aber schon für die Erzeugung eines Signals mit insgesamt nur vier Signalzuständen zwei Multiplikationen und eine Addition.

Anhand von in der Zeichnung dargestellten Ausführungsbeispielen wird nun die Erfindung näher erläutert:

Fig. 1 zeigt ein Blockschaltbild zur FSK-2PSK Modulation eines Signals und

Fig. 2 zeigt ein Blockschaltbild zur FSK-QPSK Modulation eines Signals.

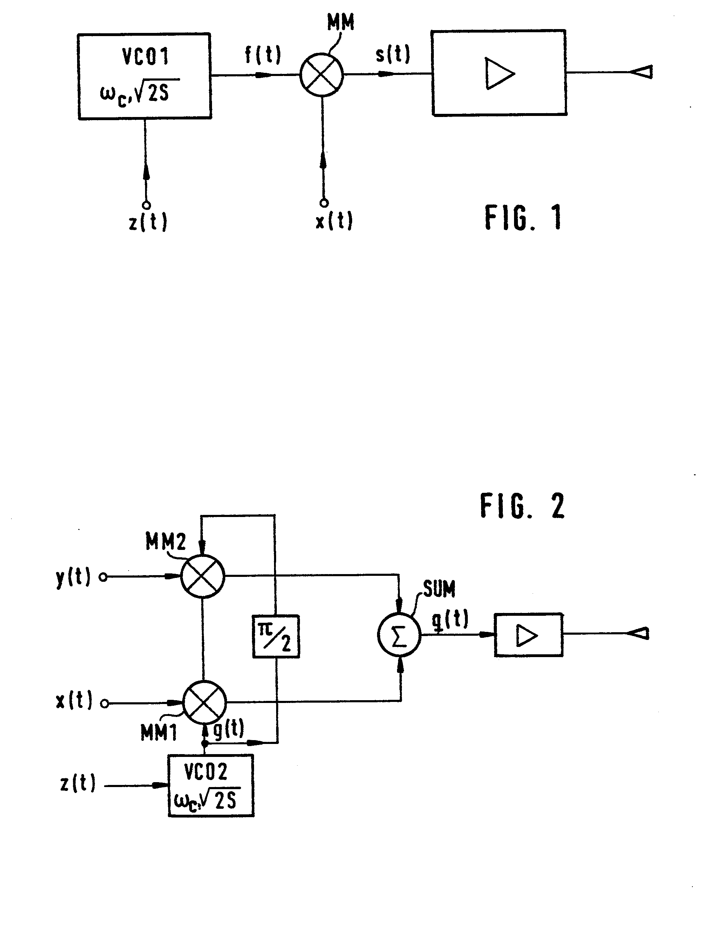

Ein Verfahren zur Modulation eines Signals sowohl durch Phasen- als auch Frequenzumtastung, wobei die Phase zwei verschiedene Zustände und auch die Frequenz zwei verschiedene Zustände ($\omega_c$ +$\Delta\omega$, $\omega_c$ -$\Delta\omega$) annehmen kann, verdeutlicht das Blockschaltbild in Fig. 1. Hierbei gibt ein spannungsgesteuerter Oszillator VCO1 ein Trägersignal

$$f(t) = \sqrt{2S} \cos \left(\omega_c t + \Delta\omega \int_o^T z(t)\, dt + \varphi_t \right)$$

ab, das gesteuert durch ein binäres Digitalsignal $z(t) = \pm 1$ entweder die um $\Delta\omega$ erhöhte oder erniedrigte Mittenfrequenz $\omega_c$ annimmt.

Das Ausgangssignal f(t) des spannungsgesteuerten Oszillators VCO1 wird schließlich in einem Multiplizierer MM mit einem zweiten binären Digitalsignal $x(t) = \pm 1$ multipli-

ziert, so daß daraus ein die Phasenzustände 0° oder 180°
annehmendes Signal entsteht. Am Ausgang des Modulators
liegt dann ein sowohl frequenz- als auch phasenumgetastetes Signal

$$s(t) = x(t) \sqrt{2S} \cos\left(\omega_c t + \Delta\omega \int_0^T z(t)\, dt + \varphi_T\right)$$

vor, das nun verstärkt und ausgesendet wird.

An Hand der Fig. 2 soll nun der Fall behandelt werden,
daß das durch Frequenz- und Phasenumtastung modulierte
Trägersignal zwei verschiedene Frequenz- und vier verschiedene Phasenzustände, also insgesamt acht Signalzustände annehmen kann. Ein solches FSK-QPSK Signal
wird auf folgende Weise gebildet:

Ein spannungsgesteuerter Oszillator VCO2 gibt ein Trägersignal

$$g(t) = \sqrt{2S} \cos\left(\omega_c t + \Delta\omega \int_0^T z(t) + \varphi_T\right)$$

ab, das gesteuert durch ein binäres Digitalsignal
$z(t) = \pm 1$ entweder die um $\Delta\omega$ erhöhte oder erniedrigte
Mittenfrequenz $\omega_c$ annimmt.

Das Ausgangssignal $g(t)$ des spannungsgesteuerten Oszillators VCO2 wird in einem ersten Multiplizierer MM1 mit einem zweiten binären Digitalsignal $x(t) = \pm 1$ und in einem
zweiten Multiplizierer MM2 um $\pi/2$ phasenverschoben mit einem dritten binären Digitalsignal $y(t) = \pm 1$ multipliziert.
Die aus den Multiplikationen hervorgehenden Signale werden
in einem Summierer SUM zusammengefaßt und ergeben das Signal

$$q(t) = x(t) \sqrt{2S} \cos\left(\omega_c t + \Delta\omega \int_0^T z(t)\, dt + \varphi_T\right) +$$

$$y(t) \sqrt{2S} \sin\left(\omega_c t + \Delta\omega \int_0^T z(t)\, dt + \varphi_T\right).$$

Dieses Signal q(t) wird schließlich verstärkt und ausgesendet.

- - - - -

ANT Nachrichtentechnik GmbH            E7/Th/kön
Gerberstraße 33                        BK 85/67
D-7150 Backnang

Patentansprüche

1. Verfahren zum Erzeugen eines sowohl frequenz- als auch
   phasenumgetasteten Signals, dadurch gekennzeichnet, daß
   ein Trägersignal auf die eine oder andere von mindestens
   zwei verschiedenen Frequenzen umgetastet wird und dieses
   frequenzumgetastete Trägersignal (f(t), g(t)) mit mindestens einem in seiner Phase auf 0° oder 180° umschaltbaren Signal (x(t), y(t)) multipliziert wird.

2. Verfahren nach Anspruch 1, dadurch gekennzeichnet, daß
   das frequenzumgetastete Trägersignal (f(t), g(t)) mit
   Hilfe eines spannungsgesteuerten Oszillators (VCO1,
   VCO3), dessen Steuerspannung ein binäres Digitalsignal
   (z(t)) ist, erzeugt wird.

3. Verfahren nach Anspruch 1, dadurch gekennzeichnet, daß
   das frequenzumgetastete Trägersignal (f(t), g(t)) mit
   einem ersten binären Digitalsignal (x(t)) nicht phasenverschoben und mit einem zweiten binären Digitalsignal
   (y(t)) um $\pi/2$ phasenverschoben multipliziert wird und
   daß die aus den zwei Multiplikationen hervorgehenden
   Signale addiert werden.

1/1

0208905

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 557 405 (TRT) * Seite 4, Zeile 28 - Seite 6, Zeile 10; Figuren 1,2 * | 1 | H 04 L 27/00 H 04 L 25/02 |
| Y | | 2,3 | |
| | --- | | |
| Y | ALTA FREQUENZA, Band 52, Nr. 6, November/Dezember 1983, Seiten 460-467, Milano, IT; R. MACCHI et al.: "Field evaluation of a 70 Mb/s 7/11 GHz digital radio link" * Seite 462, Abschnitt 2.2; Figur 4 * | 2,3 | |
| | --- | | |
| X | IEEE TRANSACTIONS ON COMMUNICATIONS, Band COM-30, Nr. 8, August 1982, Seiten 1918-1925, IEEE, New York, US; Y. SAITO et al.: "16QAM carrier recovery PLL for service-channel transmission using FSK additional modulation" * Seite 1919, linke Spalte, Zeilen 19-43; Figur 1 * | 1-3 | RECHERCHIERTE SACHGEBIETE (Int. Cl.4) H 04 L H 04 B |
| | --- | | |
| X | PATENTS ABSTRACTS OF JAPAN, Band 8, Nr. 200 (E-266)[1637], 13. September 1984; & JP-A-59 86 945 (MATSUSHITA DENKI SANGYO K.K.) 19-05-1984 * Zusammenfassung * | 1 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 02-10-1986 | VAN WEEL E.J.G. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 290 140 (R. MALM) <br> * Spalte 3, Zeile 63 - Spalte 4, Zeile 13; Figur 1 * | 1 | |
| A | R.C. DIXON: "Spread Spectrum Systems", 1976, Seiten 102-105,114-117, J. WILEY & SONS, New York, US <br> * Seiten 103,104,115,116; Figuren 4.11,4.20 * | 1,3 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 02-10-1986 | VAN WEEL E.J.G. |